# EUROPÄISCHE PATENTSCHRIFT

(11) **EP 1 448 815 B1**
(45) Veröffentlichungstag und Bekanntmachung des Hinweises auf die Patenterteilung: **01.08.2007**
(21) Anmeldenummer: 02787396.7
(22) Anmeldetag: 22.11.2002
(51) Int. Cl.: D01F 1/09, B01J 35/06, H01L 51/00

(54) **NANODRÄHTE UND VERFAHREN ZU IHRER HERSTELLUNG**
NANOWIRES AND METHOD FOR PRODUCING THE SAME
NANOFILS ET LEUR PROCEDE DE PRODUCTION

(30) Priorität: 29.11.2001 DE 10159192
(43) Veröffentlichungstag der Anmeldung: 25.08.2004
(73) Patentinhaber: Leibniz-Institut für Polymerforschung Dresden e.V., 01069 Dresden (DE)
(72) Erfinder: GORODYSKA, Anna, 01069 Dresden (DE); KIRIY, Anton, 01087 Dresden (DE); MINKO, Sergiy Egon Matijevich Chair Prof. of Chem., Potsdam, NY 13699-5814 (US); STAMM, Manfred, 01705 Freital (DE)
(74) Vertreter: Rauschenbach, Marion
(86) Internationale Anmeldenummer: PCT/DE2002/004325
(87) Internationale Veröffentlichungsnummer: WO 2003/048433

(56) Entgegenhaltungen:
- MINKO S ET AL: "Mineralization of Single Flexible Polyelectrolite Molecules" JOURNAL OF THE AMERICAN CHEMICAL SOCIETY, Bd. 124, Nr. 34, 28. August 2002 (2002-08-28), Seiten 10192-10197, XP002236332
- MINKO S ET AL : "Single Flexible Hydrophobic Polyelectrolite Molecules Adsorbed on Solid Substrate: Transition between a Stretched Chain, Necklace-like Conformation and a Globule" JOURNAL OF THE AMERICAN CHEMICAL SOCIETY, Bd. 124, Nr. 13, 3. April 2002 (2002-04-03), Seiten 3218-3219, XP002236333
- RICHTER J ET AL: "CONSTRUCTION OF HIGHLY CONDUCTIVE NANOWIRES ON A DNA TEMPLATE" APPLIED PHYSICS LETTERS, AMERICAN INSTITUTE OF PHYSICS. NEW YORK, US, Bd. 78, Nr. 4, 22. Januar 2001 (2001-01-22), Seiten 536-538, XP000996897 ISSN: 0003-6951
- RICHTER J ET AL: "NANOSCALE PALLADIUM METALLIZATION OF DNA" ADVANCED MATERIALS, VCH VERLAGSGESELLSCHAFT, WEINHEIM, DE, Bd. 12, Nr. 7, 4. April 2000 (2000-04-04), Seiten 507-510, XP000949756 ISSN: 0935-9648 in der Anmeldung erwähnt
- BRAUN E ET AL: "DNA-templated assembly and electrode attachment of a conducting silver wire" NATURE, MACMILLAN MAGAZINES, US, Bd. 6669, Nr. 391, Seiten 775-778, XP002079216 ISSN: 0028-0836

## Beschreibung

### Anwendungsgebiet der Erfindung

Die Erfindung bezieht sich auf das Gebiet der Chemie und Nanotechnik und betrifft Nanodrähte, wie sie beispielsweise in nanoelektronischen, optischen oder magnetischen Bauteilen oder Materialien, wie z.B. Katalysatoren zur Anwendung kommen können und ein Verfahren zu ihrer Herstellung.

### Stand der Technik

In der modernen Elektronik verläuft ein wesentlicher Trend in Richtung der Miniaturisierung von Bauteilen bis in den Nanobereich. Dazu sind auch Verbindungselemente notwendig, die ihre Funktion auch bei diesen geringen Abmessungen, wie sie in der Nanotechnik erforderlich sind, aufrechterhalten.
Dazu sind bisher metallische Nanodrähte bekannt, die ein derartiges Verbindungselement sind, und damit eine Schlüsselstellung in der Nanotechnik einnehmen. Insbesondere nimmt die Bedeutung derartiger Nanodrähte auch deshalb zu, weil diese Nanodrähte spezielle optische, magnetische oder katalytische Eigenschaften aufweisen können.

Zur Herstellung derartiger metallischer Nanodrähte sind bereits verschiedene Verfahren bekannt. Beispielsweise sind verschiedene chemische Verfahren bekannt, die auf der Reduzierung von Metallen basieren (Adv. Mater. 11, 850-852 (1999); Chem. Mater. 13, 2753-2755 (2001)).

Es sind weiterhin Verfahren bekannt, bei denen die Ablagerung des Metalles auf einem Träger oder in den zylindrischen Poren eines Trägermaterials durchgeführt wird, wie beispielsweise auf Kohlenstoffnanoröhren, drahtartigen Membranen oder DNA-Molekülen (Chem. Mater. 12, 202-205 (2000); Chem. Commun. 617 (2001)).

DNA-Moleküle sind für die Herstellung von metallischen Nanodrähten bisher erfolgreich als Bioträger angewandt worden. Die Herstellung von 20-100 nm dicken Nanodrähten erfolgt in zwei Schritten durch Anlagerung von Metallen (Pd, Ag) und durch chemische Reduktion an eine DNA.

Von Richter u.a. (Adv. Mater. 12, 507-510 (2000)) ist ein 2-Schritt-Verfahren zur Herstellung von Palladium-Nanodrähten auf DNA-Strukturen beschrieben worden. Dabei wird die DNA im ersten Schritt durch Palladium-Acetat aktiviert, in dem die DNA in eine Pd-Acetat-Lösung gegeben wurde. Anschließend wurde die Reduktionslösung im Verhältnis Reduktionslösung zu DNA-Lösung von 1 : 5 dazugegeben. Der pH-Wert wurde auf 7,4 eingestellt und die Metallisierung der DNA mit Palladium-Clustern wurde realisiert. In Abhängigkeit von der Dauer der Reaktion konnte ein quasi-kontinuierlicher Pd-Film auf der DNA erhalten werden. Es entstanden bis zu 5 µm lange Nanodrähte, die eine 20 - 40 nm dicke quasikontinuierliche Schicht aus Pd aufwiesen.

Nachteilig bei allen diesen Verfahren ist, dass sie sehr aufwendig sind und eine Steuerung von Durchmesser und Länge der Schicht nicht in ausreichendem Maße ermöglichen können.

### Darstellung der Erfindung

Die Aufgabe der vorliegenden Erfindung ist es, Nanodrähte und ein Verfahren zu ihrer Herstellung anzugeben, die eine hinsichtlich Dicke und Länge steuerbare Metallisierungsschicht aufweisen und einfach und kostengünstiger herstellbar sind.

Die Aufgabe wird durch die in den Ansprüchen angegebene Erfindung gelöst. Weiterbildungen sind Gegenstand der Unteransprüche.

Die erfindungsgemäßen Nanodrähte bestehen aus einem Polymerkern. Dieser Polymerkern ist mindestens aus synthetischen hydrophoben Polyelektrolyt-Molekülen aufgebaut, die auf einem Substrat angeordnet sind oder in einer Lösung vorliegen. Dabei können auf dem Substrat oder in der Lösung ein einzelner Polyelektrolyt-Molekülstrang oder mehrere derartige Molekülstränge gleicher oder unterschiedlicher Länge und/oder Durchmesser angeordnet sein. Auch können die Polyelektrolyt-Moleküle aus dem gleichen synthetischen hydrophoben Polyelektrolyt oder aus einem oder mehreren anderen synthetischen hydrophoben Polyelektrolyten bestehen. Es ist ebenfalls möglich, dass ein Polyelektrolyt-Molekülstrang durch eine oder mehrere nichtgeladene Ketten mit einem oder mehreren weiteren Polyelektrolyt-Molekülsträngen verbunden ist. Die Polyelektrolyt-Molekülstränge können linear oder auch verzweigt sein. Weiterhin können die Polyelektrolyt-Moleküle chemisch modifiziert vorliegen, wobei die hydrophoben Eigenschaften erhalten bleiben. Die Modifizierung kann vollständig oder teilweise vorliegen. Eine besonders vorteilhafte Variante der Modifizierung ist die Quaternisierung von Polyelektrolyt-Molekülen mit Amino- oder Pyridin-Gruppen. Ebenfalls ist es möglich, dass die Polyelektrolyt-Moleküle in gelöster Form und/oder als Aggregate und/oder als Mizellen vorliegen. Für den Fall, dass die Polyelektrolyt-Moleküle in Lösung vorliegen, kann das Lösungsmittel vorteilhafterweise aus Wasser mit Metallsalzen bestehen. Die Nanodrähte liegen vor, wenn auf dem Polymerkern eine teilweise oder vollständige Metallschicht vorhanden ist. Dabei können diese Nanodrähte auf einem Substrat angeordnet sein oder in einer Flüssigkeit vorliegen.

Vorteilhafterweise ist der Polyelektrolyt Poly(2-vinylpyridine) und/oder Poly(4-vinylpyridine) (PVP) oder Poly-Methacryloyloxyethyldimethylbenzylammoniumchlorid.

Ebenfalls vorteilhafterweise sind die erfindungsgemäßen Nanodrähte bis zu 2000 nm lang und/oder bis zu 1 nm dünn ausgebildet.

Weiterhin ist vorteilhafterweise das Substrat ein Si-Wafer, oder es besteht aus Glimmer oder aus einem anderen polaren Material.

Vorteilhaft ist auch, wenn die Metallschicht aus Clustern besteht, die einzeln oder zusammenhängend ausgebildet sein können.

Es ist auch vorteilhaft, wenn die Metallschicht aus Palladium, Gold, Silber, Kobalt, Kupfer, Nickel, Eisen, Platin oder Legierungen davon besteht.

Bei dem erfindungsgemäßen Verfahren zur Herstellung der erfindungsgemäßen Nanodrähten liegen mindestens ein oder mehrere synthetische hydrophobe Polyelektrolyt-Moleküle als Polymerkern vor, die entweder in einer wässrigen Lösung vorliegen oder in einer wässrigen Lösung auf die Oberfläche eines Substrates aufgebracht werden. Anschließend wird das Substrat oder die Lösung mit den Polyelektrolyt-Molekül(en) mit einer Flüssigkeit mit einem pH-Wert, der im gleichen Bereich des pH-Wertes der wässrigen Polyelektrolyt-Molekül-Lösung liegt, in Kontakt gebracht, wobei die Flüssigkeit Metalle und/oder Metallverbindungen in gelöstem oder kolloidalem oder mizellarem Zustand enthält.
Für den Fall des Einsatzes eines Substrates liegen die Polyelektrolyt-Moleküle in einer wässrigen Lösung vor und können durch Abscheidung auf dem Substrat angeordnet werden. Im Falle des Vorliegens der wässrigen Lösung mit Polyelektrolyt-Molekülen ist diese vorteilhafterweise stabilisiert.

Vorteilhafterweise werden als Polyelektrolyt-Moleküle Homopolymere, statistische und/oder Block-Copolymere in verzweigter oder linearer Form eingesetzt.
Ebenfalls vorteilhafterweise sind derartige Polyelektrolyt-Moleküle Poly(2-vinylpyridine) und/oder Poly(4-vinylpyridine) (PVP) und/oder Polystyrol und/oder Polymethylmethacrylat oder Poly-Methacryloyloxyethyldimethylbenzylammoniumchlorid und/oder andere Polyacrylate.

Vorteilhaft ist auch, wenn die Polyelektrolyt-Moleküle mit einem Molekulargewicht von 1000 g/mol bis 3000000 g/mol eingesetzt werden, wobei über das Molekulargewicht die Länge der herzustellenden Nanodrähte gesteuert wird. Dabei ergeben Polyelektrolyt-Moleküle mit einem höheren Molekulargewicht längere Nanodrähte.

Vorteilhafterweise werden 5 x 10⁻⁶ g/L bis 0,5 g/L Polyelektrolyt-Moleküle in wässriger Lösung eingesetzt.

Dabei ist vorteilhafterweise der pH-Wert der wässrigen Polyelektrolyt-Molekül-Lösung im Bereich von 0,5 bis 3,5 eingestellt. Dabei richtet sich die Einstellung des pH-Wertes der wässrigen Lösung nach der Löslichkeit des eingesetzten Polyelektrolyten. Sofern der gewählte Polyelektrolyt eine wässrige Lösung mit einem höheren pH-Wert erfordert, so kann dieser höhere Wert auch für die wässrige Lösung eingestellt werden. Auch für diesen Fall ist der pH-Wert der Metallsalz-Lösung im gleichen Bereich zu wählen.

Das eingesetzte Substrat kann vorteilhafterweise eine glatte oder poröse Oberfläche aufweisen. Die Haftung der Polyelektrolyt-Moleküle auf der Oberfläche des Substrates erfolgt im wesentlichen durch elektrostatische und van-der-Waals Wechselwirkungen.

Vorteilhafterweise kann als eine Flüssigkeit, die Metalle und/oder Metallverbindungen in gelöstem oder kolloidalem oder mizellarem Zustand enthält, eine wässrige Metallsalz-Lösung eingesetzt werden. Dies kann beispielsweise eine Palladium-Acetat-Lösung oder Silber-Nitrat-Lösung oder eine Gold(3)chlorid-Lösung oder eine Kupfer(2)nitrat-Lösung oder eine Nickel(2)sulfat-Lösung oder eine Kobalt(2)nitrat-Lösung oder eine Eisen(3)chlorid-Lösung oder eine Platinchlorwasserstoffsäure mit einer Konzentration von 5 x 10⁻³ g/L bis 10 g/L sein.

Weiterhin vorteilhaft ist es, wenn die Polyelektrolyt-Moleküle mit der Metallschicht auf dem Substrat oder in einer Flüssigkeit reduzierenden Bedingungen unterworfen werden. Dies ist besonders vorteilhaft, weil damit eine möglicherweise nicht vollständig abgelaufene Reduktion der Metallsalze abgeschlossen werden kann.

Das erfindungsgemäße Verfahren ist besonders einfach durchzuführen und aufgrund des Einsatzes von synthetischen Polymeren als Kerne der Nanodrähte auch biologisch unbedenklich und kostengünstiger. Weiterhin ist durch das Vorliegen verschiedener synthetischer Polyelektrolyte die Dicke und Länge der herzustellenden Nanodrähte steuerbar. Ebenfalls ist der Einsatz von wässrigen Lösungen und Flüssigkeiten aus Umweltgründen vorteilhaft.

### Bester Weg zur Ausführung der Erfindung

Im weiteren wird die Erfindung an einem Ausführungsbeispiel näher erläutert.

### Beispiel

0,005 g des Poly(2-vinylpyridine) (Molekulargewicht 385 000 g/mol) wurde in 1L einer HCl-Wasser-Lösung mit einem pH-Wert = 2 gelöst. Ein gereinigter Si-Wafer wurden in diese Lösung 1 min eingetaucht und danach wurde der Si-Wafer mit dem auf ihm absorbiertem PVP herausgezogen und mit Wasser gespült. 0,003 g Palladium(II)-acetat wurden in 30 ml einer HCI-Wasser-Lösung mit dem pH-Wert = 2 in einem Ultraschallbad gelöst. Ungelöstes Palladium(II)-acetat wurde durch zentrifugieren (15 Minuten) entfernt. Dann wurde der Si-Wafer mit dem absorbierten PVP in die Palladium(II)-acetat-Lösung 1 Minute eingetaucht und dann herausgezogen und mit Wasser gespült.
Damit lagen Nanodrähte auf dem Si-Wafer vor.
Anschließend wurde der Si-Wafer in eine wässrige Lösung eines Boran-Dimethylamin-Komplexes (1 g/L) 1 Minute eingetaucht und wieder mit Wasser nachgespült und in Argon-Atmosphäre getrocknet.

Die erzeugten Nanodrähten wurden mit einem Kraftmikroskop (Multimode, Digital Instruments, Inc., Califomia) vermessen. Es lagen auf dem Si-Wafer Nanodrähte mit einer Dichte von ca. 10 Nanodrähten pro 2 x 2 µm² vor, die eine durchschnittliche Länge von 345 ± 5 nm, einen durchschnittlichen Durchmesser von 2,0 ± 0,5 nm und im wesentlichen eine vollständige Bedeckung der PVP-Kerne mit Palladium-Clustern aufwiesen.

## Patentansprüche

1. Nanodrähte, bestehend aus einem Polymerkern, der mindestens aus einem oder mehreren synthetischen hydrophoben Polyelektrolyt-Molekülen aufgebaut ist, und einer teilweisen oder vollständigen Metallschicht auf dem Polymerkern.

2. Nanodrähte nach Anspruch 1, die auf einem Substrat angeordnet sind oder in einer Flüssigkeit vorliegen.

3. Nanodrähte nach Anspruch 1, bei denen der Polymerkern aus synthetischen hydrophoben Polyelektrolyt-Molekülen aufgebaut ist, die Homopolymere und/oder statistischen und/oder Block-Copolymeren sind und in verzweigter und/oder linearer Form vorliegen.

4. Nanodrähte nach Anspruch 1, bei denen die Polyelektrolyt-Moleküle aus dem gleichen synthetischen hydrophoben Polyelektrolyt oder aus einem oder mehreren anderen synthetischen hydrophoben Polyelektrolyten bestehen und/oder durch eine oder mehrere nichtgeladene Ketten mit einem oder mehreren weiteren Polyelektrolyt-Molekülen verbunden sind.

5. Nanodrähte nach Anspruch 1, bei denen der Polyelektrolyt Poly(2-vinylpyridine) und/oder Poly(4-vinylpyridine) (PVP) oder Poly-Methacryloyloxyethyldimethylbenzylammoniumchlorid ist.

6. Nanodrähte nach Anspruch 1, bei denen die Polyelektrolyt-Moleküle chemisch modifiziert vorliegen.

7. Nanodrähte nach Anspruch 1, die bis zu 2000 nm lang und/oder bis zu 1 nm dünn ausgebildet sind.

8. Nanodrähte nach Anspruch 1, bei denen das Substrat ein Si-Wafer ist, aus Glimmer oder aus anderen polaren Substraten besteht.

9. Nanodrähte nach Anspruch 1, bei denen die Metallschicht aus Clustern besteht, die einzeln oder zusammenhängend ausgebildet sind.

10. Nanodrähte nach Anspruch 1, bei dem die Metallschicht aus Palladium, Gold, Silber, Kobalt, Kupfer, Nickel, Eisen, Platin oder Legierungen davon besteht.

11. Verfahren zur Herstellung von Nanodrähten nach einem der Ansprüche 1 bis 10, bei dem mindestens ein oder mehrere synthetische hydrophobe Polyelektrolyt-Moleküle als Polymerkern in einer wässrigen Lösung vorliegen oder in einer wässrigen Lösung auf die Oberfläche eines Substrates aufgebracht werden und anschließend die Lösung oder das Substrat mit den Polyelektrolyt-Molekül(en) mit einer Flüssigkeit mit einem pH-Wert, der im gleichen Bereich des pH-Wertes der wässrigen Polyelektrofyt-Molekül-Lösung liegt, in Kontakt gebracht wird, wobei die Flüssigkeit Metalle und/oder Metallverbindungen in gelöstem oder kolloidalem oder mizellarem Zustand enthält.

12. Verfahren nach Anspruch 11, bei dem als Polyelektrolyt-Moleküle Poly(2-vinylpyridine) und/oder Poly(4-vinylpyridine) (PVP) oder Poly-Methacryloyloxyethyldimethylbenzylammoniumchlorid eingesetzt werden.

13. Verfahren nach Anspruch 11, bei dem Polyelektrolyt-Moleküle mit einem Molekulargewicht von 1000 g/mol bis 3000000 g/mol eingesetzt werden, wobei über das Molekulargewicht die Länge der herzustellenden Nanodrähte gesteuert wird.

14. Verfahren nach Anspruch 11, bei dem 5 x 10⁻⁶ g/L bis 0,5 g/L Polyelektrolyt-Moleküle in wässriger Lösung eingesetzt werden.

15. Verfahren nach Anspruch 11, bei dem der pH-Wert der wässrigen Polyelektrolyt-Molekül-Lösung im Bereich von 0,5 bis 3,5 eingestellt wird.

16. Verfahren nach Anspruch 11, bei dem die Polyelektrolyt-Moleküle in wässriger Lösung auf eine glatte oder poröse Oberfläche eines Substrates aufgebracht werden.

17. Verfahren nach Anspruch 11, bei dem als Flüssigkeit wässrige Metallsalz-Lösungen oder wässrige Metallsalz-Dispersionen eingesetzt werden.

18. Verfahren nach Anspruch 11, bei dem als Metallsalz-Lösung eine Palladium-Acetat-Lösung oder Silber-Nitrat-Lösung oder eine Gold(3)chlorid-Lösung oder eine Kupfer(2)nitrat-Lösung oder eine Nickel(2)sulfat-Lösung oder eine Kobalt(2)nitrat-Lösung oder eine Eisen(3)chlorid-Lösung oder eine Platinchlorwasserstoffsäure mit einer Konzentration von 5 x 10⁻³ g/L bis 10 g/L eingesetzt wird.

19. Verfahren nach Anspruch 11, bei dem die Polyelektrolyt-Moleküle mit der Metallschicht in Lösung oder auf dem Substrat reduzierenden Bedingungen unterworfen werden.

## Claims

1. Nanowires comprising a polymer core which is made up of at least one or more synthetic hydrophobic polyelectrolyte molecules and a partial or complete metal layer on the polymer core.

2. Nanowires according to Claim 1 which are located on a substrate or present in a liquid.

3. Nanowires according to Claim 1, wherein the polymer core is made up of synthetic hydrophobic polyelectrolyte molecules which are homopolymers and/or random and/or block copolymers and are present in branched and/or linear form.

4. Nanowires according to Claim 1, wherein the polyelectrolyte molecules comprise the same synthetic hydrophobic polyelectrolyte or one or more other synthetic hydrophobic polyelectrolytes and/or are joined by one or more uncharged chains to one or more further polyelectrolyte molecules.

5. Nanowires according to Claim 1, wherein the polyelectrolyte is poly(2-vinylpyridine) and/or poly(4-vinylpyridine)(PVP) or polymethacryloyloxy-ethyldimethylbenzylammonium chloride.

6. Nanowires according to Claim 1, wherein the polyelectrolyte molecules are present in chemically modified form.

7. Nanowires according to Claim 1 which have a length of up to 2000 nm and/or a thickness of up to 1 nm.

8. Nanowires according to Claim 1, wherein the substrate is an Si wafer or comprises mica or other polar substrates.

9. Nanowires according to Claim 1, wherein the metal layer comprises clusters which are oscillated or contiguous.

10. Nanowires according to Claim 1, wherein the metal layer comprises palladium, gold, silver, cobalt, copper, nickel, iron, platinum or an alloy thereof.

11. Process for producing nanowires according to any of Claims 1 to 10, wherein at least one or more synthetic hydrophobic polyelectrolyte molecules are present as polymer core in an aqueous solution or are applied in an aqueous solution to the surface of a substrate and the solution or the substrate bearing the polyelectrolyte molecule(s) is brought into contact with a liquid having a pH which is in the same range as the pH of the aqueous polyelectrolyte molecule solution, with the liquid containing metals and/or metal compounds in a dissolved or colloidal or micellar state.

12. Process according to Claim 11, wherein poly(2-vinylpyridine) and/or poly(4-vinylpyridine) (PVP) or polymethacryloyloxyethyldimethylbenzyl-ammonium chloride are used as polyelectrolyte molecules.

13. Process according to Claim 11, wherein polyelectrolyte molecules having a molecular weight of from 1000 g/mol to 3 000 000 g/mol are used, with the length of the nanowires to be produced being controlled via the molecular weight.

14. Process according to Claim 11, wherein from 5 x 10⁻⁶ g/l to 0.5 g/l of polyelectrolyte molecules in aqueous solution are used.

15. Process according to Claim 11, wherein the pH of the aqueous polyelectrolyte molecule solution is set in the range from 0.5 to 3.5.

16. Process according to Claim 11, wherein the polyelectrolyte molecules in aqueous solution are applied to a smooth or porous surface of a substrate.

17. Process according to Claim 11, wherein aqueous metal salt solutions or aqueous metal salt dispersions are used as liquid.

18. Process according to Claim 11, wherein a palladium acetate solution or silver nitrate solution or a gold(3) chloride solution or a copper(2) nitrate solution or a nickel(2) sulphate solution or a cobalt(2) nitrate solution or an iron (3) chloride solution or a chloroplatinic acid having a concentration of from 5 x 10⁻³ g/l to 10 g/l is used as metal salt solution.

19. Process according to Claim 11, wherein the polyelectrolyte molecules with the metal layer are subjected to reducing conditions in solution or on the substrate.

## Revendications

1. Nanofils constitués d'une âme polymère qui est constituée au moins d'une ou plusieurs molécules de polyélectrolyte hydrophobe synthétique et d'une couche métallique partielle ou complète déposée sur l'âme polymère.

2. Nanofils selon la revendication 1, disposés sur un substrat ou présents dans un liquide.

3. Nanofils selon la revendication 1, dans lesquels l'âme polymère est constituée de molécules de polyélectrolyte hydrophobe synthétique qui sont des homopolymères et/ou des copolymères statistiques et/ou séquencés et qui présentent une forme ramifiée et/ou linéaire.

4. Nanofils selon la revendication 1, dans lesquels les molécules de polyélectrolyte sont constituées du même polyélectrolyte hydrophobe synthétique ou d'un ou plusieurs autres polyélectrolytes hydrophobes synthétiques et/ou sont reliées par une ou plusieurs chaînes non chargées à une ou plusieurs autres molécules de polyélectrolyte.

5. Nanofils selon la revendication 1, dans lesquels le polyélectrolyte est la poly(2-vinylpyridine) et/ou la poly(4-vinylpyridine) (PVP) ou le poly(chlorure de méthacryloyloxyéthyldiméthylbenzylammonium).

6. Nanofils selon la revendication 1, dans lesquels les molécules de polyélectrolyte sont modifiées chimiquement.

7. Nanofils selon la revendication 1, réalisés à une longueur qui peut atteindre 2 000 nm et/ou une épaisseur qui peut atteindre 1 nm.

8. Nanofils selon la revendication 1, dans lesquels le substrat est une galette de Si ou est constitué de mica ou d'autres substrats polaires.

9. Nanofils selon la revendication 1, dans lesquels la couche métallique est constituée d'amas configurés séparément ou continus.

10. Nanofils selon la revendication 1, dans lesquels la couche métallique est constituée de palladium, d'or, d'argent, de cobalt, de cuivre, de nickel, de fer, de platine ou de leurs alliages.

11. Procédé de fabrication de nanofils selon l'une des revendications 1 à 10, dans lequel au moins une ou plusieurs molécules de polyélectrolyte hydrophobe synthétique se présentent sous la forme d'une âme polymère dans une solution aqueuse ou sont appliquées en solution aqueuse à la surface d'un substrat, la solution ou le substrat qui présente la ou les molécules de polyélectrolyte étant ensuite mis en contact avec un liquide dont la valeur du pH est située dans la même plage de valeurs du pH que la solution aqueuse de molécules de polyélectrolyte, le liquide contenant des métaux et/ou des composés métalliques sous forme dissoute, colloïdale ou micellaire.

12. Procédé selon la revendication 11, dans lequel on utilise comme molécules de polyélectrolyte de la poly(2-vinylpyridine) et/ou de la poly(4-vinylpyridine) (PVP) ou du poly(chlorure de méthacryloyloxyéthyldiméthylbenzylammonium).

13. Procédé selon la revendication 11, dans lequel les molécules de polyélectrolyte utilisées ont un poids moléculaire de 1 000 g/mole à 3 000 000 g/mole, la longueur des nanofils à fabriquer étant contrôlée par l'intermédiaire du poids moléculaire.

14. Procédé selon la revendication 11, dans lequel on utilise de 5 x 10⁻⁶ g/l à 0,5 g/l de molécules de polyélectrolyte dans la solution aqueuse.

15. Procédé selon la revendication 11, dans lequel la valeur du pH de la solution aqueuse de molécules de polyélectrolyte est réglée dans la plage de 0,5 à 3,5.

16. Procédé selon la revendication 11, dans lequel les molécules de polyélectrolyte en solution aqueuse sont appliquées sur la surface lisse ou poreuse d'un substrat.

17. Procédé selon la revendication 11, dans lequel on utilise comme liquide des solutions aqueuses de sel métallique ou des dispersions aqueuses de sel métallique.

18. Procédé selon la revendication 11, dans lequel on utilise comme solution de sel métallique une solution d'acétate de palladium, une solution de nitrate d'argent, une solution de chlorure d'or (3), une solution de nitrate de cuivre (2), une solution de sulfate de nickel (2), une solution de nitrate de cobalt (2), une solution de chlorure de fer (3) ou une solution de chlorhydrate de platine à une concentration de 5 x 10⁻³ g/l à 10 g/l.

19. Procédé selon la revendication 11, dans lequel les molécules de polyélectrolyte dotées de la couche métallique subissent des conditions réductrices dans la solution ou sur le substrat.
